# EUROPÄISCHE PATENTANMELDUNG

(11) **EP 1 882 887 A2**
(43) Veröffentlichungstag der Anmeldung: **30.01.2008**
(21) Anmeldenummer: 07450131.3
(22) Anmeldetag: 25.07.2007
(51) Int. Cl.: F24D 3/14

(54) **Einrichtung zum Festlegen von Heizungsrohren**

(30) Priorität: 25.07.2006 AT 57506 U
(71) Anmelder: Pipelife Austria GmbH & CO. KG, 2355 Wr. Neudorf (AT)
(72) Erfinder: Stross, Markus, 4222 Luftenberg (AT)
(74) Vertreter: Haffner und Keschmann Patentanwälte OG

(57) **Zusammenfassung**

Bei einer Einrichtung zum Verlegen und Festlegen von Heizungsrohren für Fussbodenheizungen mit einem die Rohre zumindest teilweise umgreifenden Teil ist der die Rohre umgreifende Teil als im wesentlichen U-förmiger Bügel (1) ausgebildet bzw. hergestellt, dessen freie Schenkel (2,3) Rastausnehmungen (5) für die Aufnahme von Gitterelementen aufweisen.

## Beschreibung

Die Erfindung bezieht sich auf eine Einrichtung zum verlegen und Festlegen von Heizungsrohren für Fussbodenheizungen mit einem die Rohre zumindest teilweise umgreifenden Teil.

Für die Festlegung von Rohren bzw. Leitungen für Fussbodenheizungen auf Baustahlgittern ist es bekannt, zunächst mit derartigen Baustahlgittern Clips zu verbinden, in welche in der Folge die Rohre bzw. Leitungen durch Eindrücken verrastet werden. Auf die Baustahlgitter wird nach einer derartigen Fertigstellung durch Einlegen der Rohre Estrich aufgebracht, wobei in diesem Zusammenhang die Gefahr besteht, dass die in die Clips eingedrückten Rohre aufschwimmen und ihre definierte Position nicht einhalten. Die Festlegung der Rohre und der Clips erfordert bei den bekannten Ausbildungen zwei gesonderte Arbeitsschritte, wobei nach dem Festlegen der Clips die jeweilige Position der Rohre nicht mehr beliebig verändert werden kann.

Die Erfindung zielt nun darauf ab, eine Einrichtung der eingangs genannten Art zu schaffen, mit welcher die Verlegung in einem einzigen Arbeitsschritt erfolgen kann und gleichzeitig bei erhöhter Trittsicherheit ein Aufschwimmen der Rohre im Estrich nachhaltig verhindert wird. Weiters zielt die Erfindung darauf ab, ein Verkippen der für die Festlegung gewählten Elemente zu verhindern, um eine genauere Einhaltung der gewünschten Position der Rohre im Estrich zu gewährleisten. Schließlich soll mit der erfindungsgemäßen Ausbildung eine bessere Adaptierung der jeweils gewünschten Rohrabstände auf beliebigen Baustahlgittern bzw. Trägermatten ermöglicht werden.

Zur Lösung dieser Aufgabe besteht die erfindungsgemäße Einrichtung im wesentlichen darin, dass der die Rohre umgreifende Teil als im wesentlichen U-förmiger Bügel ausgebildet ist, dessen freie Schenkel Rastausnehmungen für die Aufnahme von Gitterelementen aufweisen. Dadurch, dass der die Rohre umgreifende Teil als im wesentlichen U-förmiger Bügel ausgebildet ist, kann ein derartiger Bügel gleichzeitig mit dem Verlegen der Rohre von oben auf die Gitterelemente und insbesondere das Baustahlgitter angepresst werden und dadurch, dass die freien Schenkel dieser im wesentlichen U-förmigen Bügel Rastausnehmungen für die Aufnahme von Gitterelementen aufweisen, lässt sich nachträglich gleichzeitig mit der Verlegung der Rohre jeweils an beliebiger Stelle eine entsprechende Festlegung erzielen. Um die Verlegung hierbei zu vereinfachen, sind die Bügel bereits U-förmig hergestellt und müssen nicht erst bei der Verlegung zu einer U-Form gebogen werden. Die Festlegung am Baustahlgitter bzw. der Trägermatte erfolgt hierbei an zwei voneinander getrennten Stellen, nämlich den freien Enden der Schenkel, sodass eine höhere Stabilität erzielt wird. Der die Rohre vollständig übergreifende Teilbereich der Bügel verhindert hierbei ein Aufschwimmen der Rohre im Estrich und die Rastausnehmungen erlauben die nachträgliche Festlegung derartiger Bügel in der jeweils gewünschten Position an beliebigen Stellen des Gitters bzw. der Trägermatte.

In besonders bevorzugter Weise ist die erfindungsgemäße Ausbildung hierbei so weitergebildet, dass die Rastausnehmungen von elastisch aufweitbaren Rillen gebildet sind, deren Ränder in einem Abstand voneinander liegen, der kleiner ist als der lichte Durchmesser der Rillen und deren Achsen sich quer zur Achse der U-förmigen Bügel erstrecken. Derartig elastisch aufweitbare Rillen sichern den Halt der Bügel, wobei die Bügel quer zur Achse der Rohre liegen und auf diese Weise nach dem Aufpressen auf Gitterstäbe auch gegen Verkippen auch in Umlenkungen des Rohres gesichert sind.

In besonders vorteilhafter Weise ist die Ausbildung so weitergebildet, dass die lichte Weite des U-förmigen Bügels kleiner ist als die vom Grund der Rillen weg gemessene lichte Höhe des U-förmigen Bügels, sodass eine definierte Freiheit für Bewegungen des Rohres in Höhenrichtung gewährleistet ist, wodurch ein sicheres Verrasten der Clips an der Trägermatte erzielt werden kann.

In besonders vorteilhafter Weise ist die Ausbildung so getroffen, dass der Materialquerschnitt des Bügels in dem das Rohr umgreifenden Bereich kleiner als im die Rillen tragenden Endbereich der freien Schenkel gewählt ist. Auf diese Weise wird eine gewisse Elastizität des die Rohre übergreifenden Bereiches sichergestellt und gleichzeitig eine entsprechend stabile Ausbildung des Bügels im Bereich der der Verrastung dienenden Elemente gewährleistet.

In einfacher Weise können die Bügel aus Kunststoff bestehen.

In besonders bevorzugter Weise ist die Ausbildung derart weitergebildet, dass die einander zugewandten Flächen der Schenkel des U-förmigen Bügels einen spitzen Winkel miteinander einschließen, sodass die lichte Weite zwischen den Schenkeln in Richtung zum freien Ende der Schenkel abnimmt. Eine derartige Ausbildung erleichtert das Vorrätighalten einer Mehrzahl von erfindungsgemäßen U-förmigen Bügeln in einer Vorrichtung zum Setzen der U-förmigen Bügel. In einer derartigen Setzeinrichtung werden eine Mehrzahl von U-förmigen Bügeln auf einer rohr- oder stangenförmigen Zuführvorrichtung vorrätig gehalten, wobei die U-förmigen Bügel durch leichtes Auseinanderbiegen der beiden Schenkel auf der rohr- bzw. stangenförmigen Führung platziert werden. Nach dem Zurückfedern der beiden Schenkel ergibt sich zwischen diesen eine verringerte lichte Weite, die ein Herabfallen von der stangen- bzw. rohrförmigen Führung verhindert.

Ein weiterer Vorteil des erfindungsgemäßen Bügels oder Clips besteht darin, dass mit dem gleichen Bügel unterschiedliche Rohrdimensionen sicher festgelegt werden können.

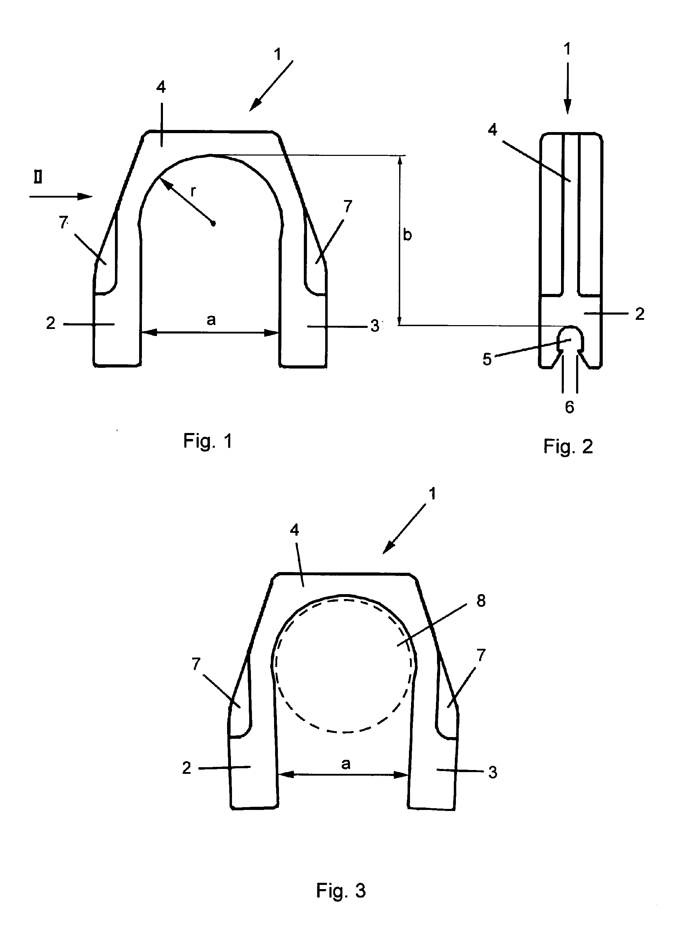

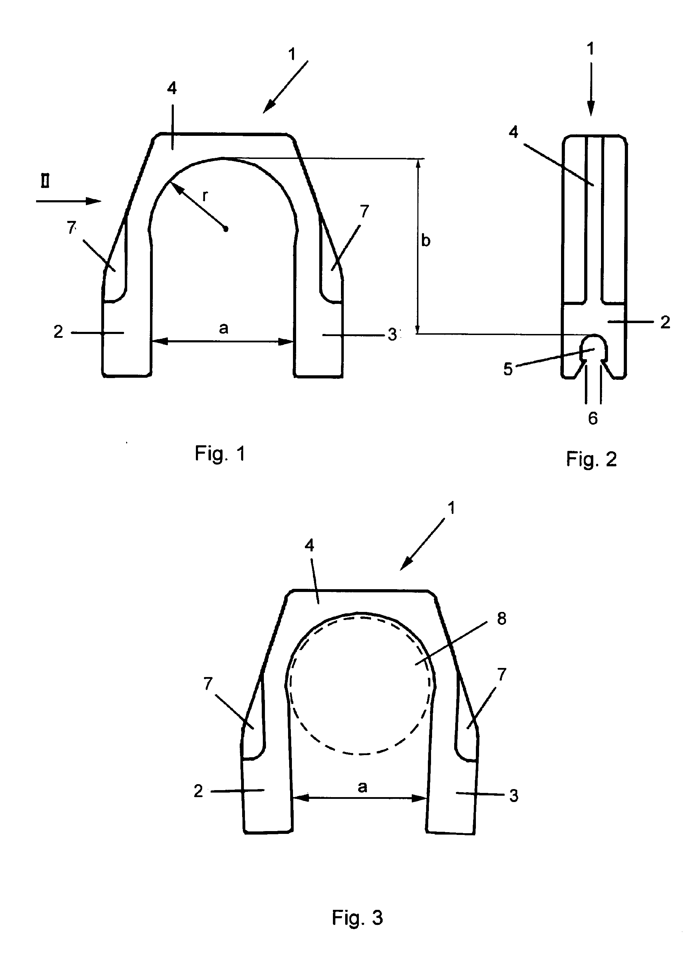

Die Erfindung wird nachfolgend anhand eines in der Zeichnung schematisch dargestellten Ausführungsbeispiels näher erläutert. In dieser zeigen Fig.1 eine Vorderansicht der erfindungsgemäßen Einrichtung, Fig.2 eine Ansicht in Richtung des Pfeils II der Fig.1 und Fig.3 eine abgewandelte Ausbildung der erfindungsgemäßen Einrichtung.

In Fig. 1 ist ein im wesentlichen U-förmiger Bügel 1 ersichtlich, dessen freie Schenkel 2 und 3 eine lichte Weite a aufweisen. Der die freien Schenkel 2 und 3 verbindende mittlere Teilbereich des U-förmigen Bügels 1 ist mit 4 bezeichnet und mit einen Radius r verrundet, welcher im wesentlichen der halben lichten Weite a der freien Schenkel 2 und 3 entspricht. Der mittlere Teil 4 sowie die beiden Bügel 2 und 3 übergreifen ein in der Zeichnung nicht dargestelltes Rohr einer Fußbodenheizung und werden mittels in den freien Enden der Schenkel 2 und 3 vorgesehener Rastausnehmungen an Gitterelementen verrastet. Diese Rastausnehmungen sind in Fig.2 ersichtlich und als Rille 5 bezeichnet. Diese Rille 5 ist elastisch aufweitbar, wobei die Ränder 6 der Rille in einem Abstand voneinander liegen, der kleiner ist als die lichte Weite der Rille 5, sodass beim Aufpressen auf Gitterelemente ein Verrasten erfolgt. Die Verrastung erfolgt hierbei quer zur Längsrichtung des die U-förmigen Bügel durchsetzenden Rohres, wobei zur Erhöhung der Elastizität des U-förmigen Bügels in dem Bereich außerhalb der freien Enden, welche die Rastausnehmungen tragen, der Materialquerschnitt verringert ist. Im Bereich der Rastausnehmungen ergibt sich aus den Fig.1 und 2 ein im wesentlichen quadratischer Querschnitt, welcher über Rippen 7, wie sie in Fig.1 ersichtlich sind, in einen entsprechend verringerten Querschnitt im die Schenkel 2 und 3 verbindenden mittleren Bereich 4 übergeht.

Die Achsen der Rillen 5 erstrecken sich quer zur Achse der von den U-förmigen Bügeln 1 umgriffenen Rohre.

In der Darstellung gemäß Fig.3 schließen die einander zugewandten Flächen der Schenkel 2 und 3 einen spitzen Winkel miteinander ein, sodass die lichte Weite a zwischen den Schenkeln in Richtung zum freien Ende der Schenkel 2 und 3 abnimmt. Eine derartige Ausbildung verhindert, dass der U-förmige Bügel 1 von einer mit strichlierten Linien angedeuteten Zurühreinrichtung 8 einer Setzeinrichtung herabfällt.

## Patentansprüche

1. Einrichtung zum Verlegen und Festlegen von Heizungsrohren für Fussbodenheizungen mit einem die Rohre zumindest teilweise umgreifenden Teil, **dadurch gekennzeichnet, dass** der die Rohre umgreifende Teil als im wesentlichen U-förmiger Bügel (1) ausgebildet bzw. hergestellt ist, dessen freie Schenkel (2,3) Rastausnehmungen (5) für die Aufnahme von Gitterelementen aufweisen.

2. Einrichtung nach Anspruch 1, **dadurch gekennzeichnet, dass** die Rastausnehmungen (5) von elastisch aufweitbaren Rillen gebildet sind, deren Ränder (6) in einem Abstand voneinander liegen, der kleiner ist als der lichte Durchmesser der Rillen (5) und deren Achsen sich quer zur Achse der U-förmigen Bügel (1) erstrecken.

3. Einrichtung nach Anspruch 1 oder 2, **dadurch gekennzeichnet, dass** die lichte Weite (a) des U-förmigen Bügels (1) kleiner ist als die vom Grund der Rillen (5) weg gemessene lichte Höhe (b) des U-förmigen Bügels (1).

4. Einrichtung nach Anspruch 1, 2 oder 3, **dadurch gekennzeichnet, dass** der Materialquerschnitt des Bügels (2) in dem das Rohr umgreifenden Bereich kleiner als im die Rillen (5) tragenden Endbereich der freien Schenkel (2,3) gewählt ist.

5. Einrichtung nach einem der Ansprüche 1 bis 4, **dadurch gekennzeichnet, dass** die Bügel aus Kunststoff bestehen.

6. Einrichtung nach einem der Ansprüche 1 bis 5, **dadurch gekennzeichnet, dass** die einander zugewandten Flächen der Schenkel (2,3) des U-förmigen Bügels (1) einen spitzen Winkel miteinander einschließen, sodass die lichte Weite (a) zwischen den Schenkeln (2,3) in Richtung zum freien Ende der Schenkel (2,3) abnimmt .
